# EUROPEAN PATENT APPLICATION

(11) **EP 2 523 430 A1**
(43) Date of publication of application: **14.11.2012**
(21) Application number: 12163747.4
(22) Date of filing: 11.04.2012
(51) Int. Cl.: H04M 1/23, H04M 1/02, G06F 1/16

(54) **ELECTRONIC APPARATUS**

(30) Priority: 09.05.2011 JP 2011104610
(71) Applicant: FUJITSU LIMITED, Kawasaki-shi, Kanagawa 211-8588 (JP)
(72) Inventor: Kojima, Kei, Kawasaki-shi, Kanagawa 211-8588 (JP); Nishi, Takahisa, Kawasaki-shi, Kanagawa 211-8588 (JP); Tokuyama, Yosui, Kawasaki-shi, Kanagawa 211-8588 (JP); Sugimori, Kenta, Kawasaki-shi, Kanagawa 211-8588 (JP); Kageyama, Kazuhiko, Kawasaki-shi, Kanagawa 211-8588 (JP)
(74) Representative: Stebbing, Timothy Charles

(57) **Abstract**

There is provided an electronic apparatus that includes a display unit including a planar display region (110), an operation unit formed on a side on which the planar display region is formed, the operation unit including pressable buttons (150), and a protrusion member (160) formed between two of the buttons (150), the protrusion member protruding from a surface of the planar display region (110). This helps to prevent damage to the display unit.

## Description

### FIELD

The present invention relates to an electronic apparatus.

### BACKGROUND

Some existing electronic apparatuses, such as cell phones, have a foldable configuration in which two separate casings (casing halves) may flip over (fold relative to) each other. In most of such foldable style electronic apparatuses, one of the casings includes, for example, an operation unit, such as keys, and the other includes, for example, a display unit, such as a liquid crystal display panel. The two separate casings are connected using, for example, a hinge. In this way, the electronic apparatuses are foldable.

In general, in order to easily carry a foldable style electronic apparatus, the foldable style electronic apparatus is folded when not in use. When the foldable style electronic apparatus is folded in order not to expose the operation unit and the display unit of the two casings to the outside, the operation unit and the display unit may face each other. At that time, the risk of damage of the display unit due to a contact with the keys of the operation unit arises. Accordingly, by providing a protrusion on one of the casings, the display unit may be protected even when the foldable style electronic apparatus is folded.

That is, a protrusion is provided at a location facing a region not including the display unit when the electronic apparatus is folded. For example, a circumferential edge is provided on the surface of the casing having the operation unit thereon. By providing such a protrusion, the protrusion is in contact with a region other than the display unit region when the electronic apparatus is folded. Thus, the keys, for example, are not in direct contact with the display unit. As a result, damage of the display unit may be avoided even when the electronic apparatus is folded.

Japanese Laid-open Patent Publication Nos. 2003-264617, 2006-115163, and 2009-260461 are examples of related art.

In general, damage of a display unit may occur not only in foldable style electronic apparatuses but also in other apparatuses. For example, a straight style cell phone that is not foldable includes a display unit that is exposed to air at all times. Accordingly, the risk of damage of the display unit arises when the cell phone is placed on, for example, a desk.

More specifically, when such a straight style cell phone is placed on, for example, a desk with the surface of a display unit facing downward, the display unit may be in direct contact with the desk and, therefore, the display unit may be damaged. Accordingly, in order to protect the display unit of a straight style cell phone from being damaged, a protrusion that is similar to that of a foldable style electronic apparatus may be provided on the periphery of the display unit.

However, if such a protrusion is provided on the surface of the housing, the aesthetic or attractive appearance of the electronic apparatus is spoiled and, therefore, it is not desirable to provide a protrusion in terms of the design. In particular, since the straight style electronic apparatus is not folded, the protrusion provided on the periphery of the display unit is visible at all times. Thus, the aesthetic appearance of the electronic apparatus is spoiled.

Accordingly, the present technology provides an electronic apparatus that protects the display unit from being damaged without spoiling the aesthetic appearance of the electronic apparatus.

### SUMMARY

Accordingly, it is desirable to provide an electronic apparatus that protects the display unit from being damaged without spoiling the aesthetic appearance of the electronic apparatus.

According to an aspect of the invention, an electronic apparatus includes a display unit including a planar display region, an operation unit formed on a side on which the planar display region is formed, the operation unit including a plurality of operable keys or buttons, and at least one protrusion member (protruding member or extruding member) formed between two or more of the plurality of keys/buttons, the protrusion member protruding from, or above, a surface of the planar display region.

It is to be understood that both the foregoing general description and the following detailed description are exemplary and explanatory and are not restrictive of the invention, as claimed.

### BRIEF DESCRIPTION OF DRAWINGS

FIG. 1 is a perspective view of the exterior appearance of a mobile terminal device viewed from the side of a display unit of the mobile terminal device according to a first embodiment;

FIG. 2 is a perspective view of the exterior appearance of the mobile terminal device viewed from the side of a camera of the mobile terminal device according to the first embodiment;

FIG. 3 is an exploded perspective view of the mobile terminal device according to the first embodiment;

FIG. 4 is another exploded perspective view of the mobile terminal device according to the first embodiment;

FIG. 5 is a schematic cross-sectional view taken along a line V-V of FIG. 1;

FIG. 6 is a perspective view of a front key unit according to the first embodiment;

FIG. 7 is an exploded perspective view of the front key unit according to the first embodiment;

FIG. 8 illustrates the mobile terminal device placed on a flat surface according to the first embodiment;

FIG. 9 is a perspective view of the exterior appearance of a mobile terminal device according to a second embodiment viewed from the side of a display unit of the mobile terminal device; and

FIG. 10 is a schematic cross-sectional view taken along a line X-X of FIG. 9.

### DESCRIPTION OF EMBODIMENTS

Embodiments of the electronic apparatus of the technology are described in detail below with reference to the accompanying drawings. While the following embodiments are described with reference to a mobile terminal device as an example of an electronic apparatus, the embodiments are not limited to such a mobile terminal device.

First Embodiment

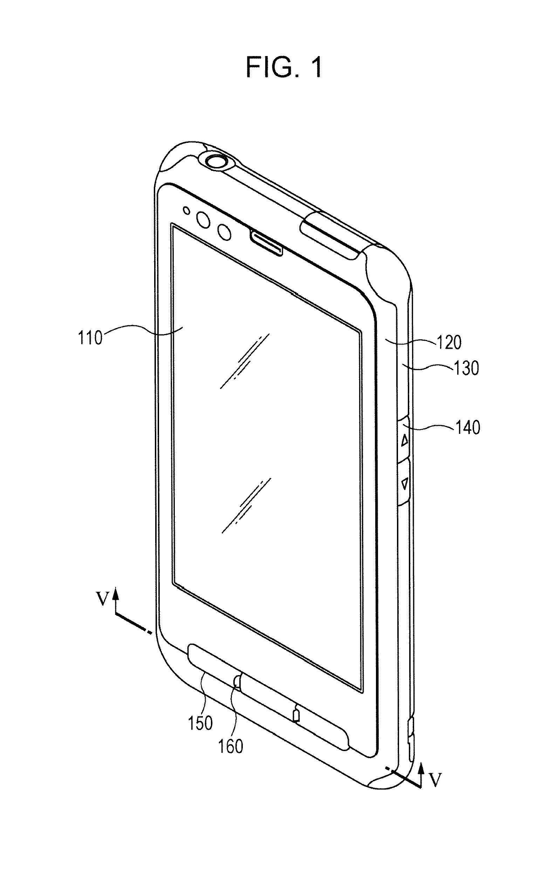

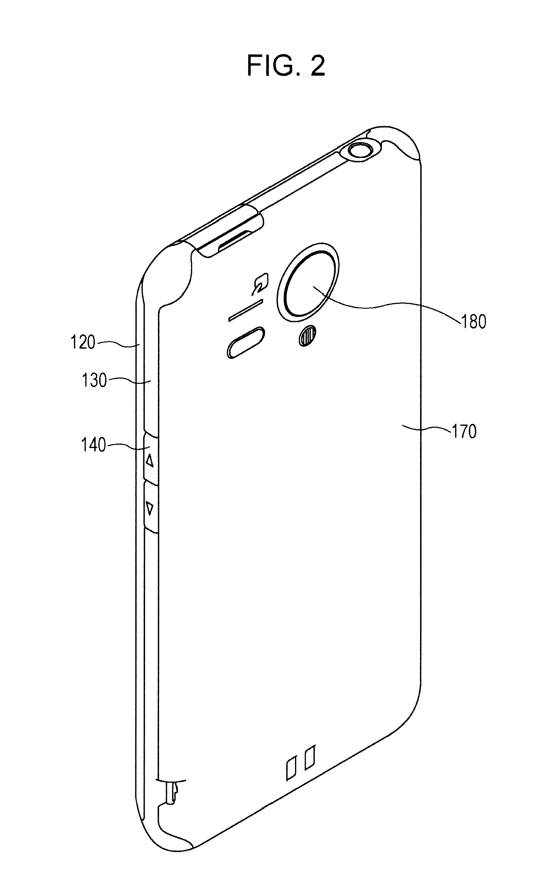

FIG. 1 is a perspective view of the exterior appearance of a mobile terminal device viewed from the side of a display unit of the mobile terminal device according to a first embodiment. FIG. 2 is a perspective view of the exterior appearance of the mobile terminal device viewed from the side of a camera of the mobile terminal device according to the first embodiment. As illustrated in FIGs. 1 and 2, the mobile terminal device includes a protection panel 110 for a display such as a liquid crystal display and henceforth referred to as a liquid crystal protection panel, a front casing 120, a rear casing 130, a side key set 140, a front key set 150, protrusion members 160, a rear cover 170, and a camera 180.

The liquid crystal protection panel 110 covers a liquid crystal display panel for example, provided inside the mobile terminal device. The liquid crystal protection panel 110 allows the light of an image displayed on the liquid crystal panel to pass therethrough in a display region at the center thereof. Thus, the liquid crystal protection panel 110 displays a variety of images, such as an image captured by the camera 180. That is, the liquid crystal protection panel 110 forms a display unit of the mobile terminal device together with the liquid crystal panel (described in more detail below).

The front casing 120 serves as part of housing disposed on the display unit side of the mobile terminal device. The front casing 120 supports the liquid crystal panel (described in more detail below). In addition, the front casing 120 has the liquid crystal protection panel 110 attached thereto at a position at which the front casing 120 covers the liquid crystal panel.

The rear casing 130 serves as part of the housing disposed on the side of the camera 180 of the mobile terminal device. The rear casing 130 is joined to the front casing 120 so as to define the exterior shape of the whole mobile terminal device.

The side key set 140 is exposed through the rear casing 130. By pressing each key of the side key set 140, a predetermined function of the mobile terminal device is executed. That is, the side key set 140 receives an operation, such as volume control, performed by a user.

The front key set 150 is exposed through the boundary area between the liquid crystal protection panel 110 and the front casing 120. By pressing each key of the front key set 150, a predetermined function of the mobile terminal device is executed. That is, the front key set 150 receives an operation, such as power-on, performed by the user. Note that the front key set 150 includes a plurality of independent keys or buttons (henceforth referred to as keys, for simplicity). Different functions are assigned to the plurality of keys. In addition, since the front key set 150 serves as the operation unit that is exposed on the same plane as the liquid crystal protection panel 110, the display unit and the operation unit are disposed in the same plane.

The protrusion members 160 outwardly protrude from a plurality of boundary areas between the keys of the front key set 150. In the example show, protrusion members extend between adjacent two of keys provided in a row. More specifically, the protrusion members 160 outwardly protrude so to as to have a height that is higher than the plane of the display area of the liquid crystal protection panel 110. In addition, the protrusion members 160 outwardly protrude so as to have a height that is higher than the front key set 150 that is in a state of not being pressed. Accordingly, the protrusion members 160 protrude in such a direction that the top ends of the protrusion members 160 are the highest from the surface on which the liquid crystal protection panel 110 of the mobile terminal device is disposed.

The rear cover 170 is attached to the rear casing 130 so as to cover the surface of the mobile terminal device on the side of the camera 180.

The camera 180 includes a camera module (described below). In response to a user operation, the camera 180 captures an image. In order to operate the camera 180, the side key set 140 or the front key set 150 may be used.

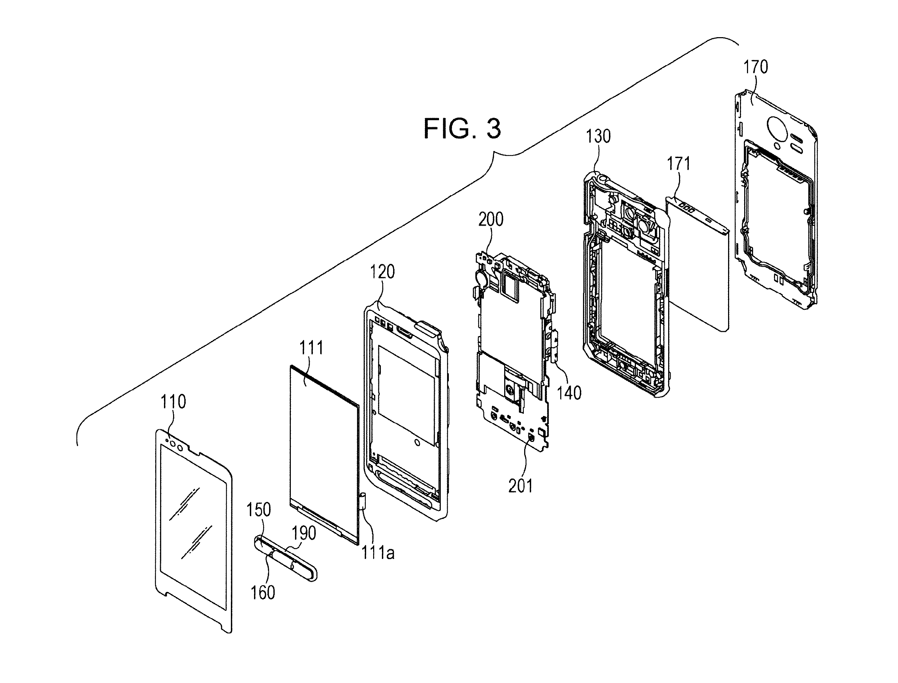

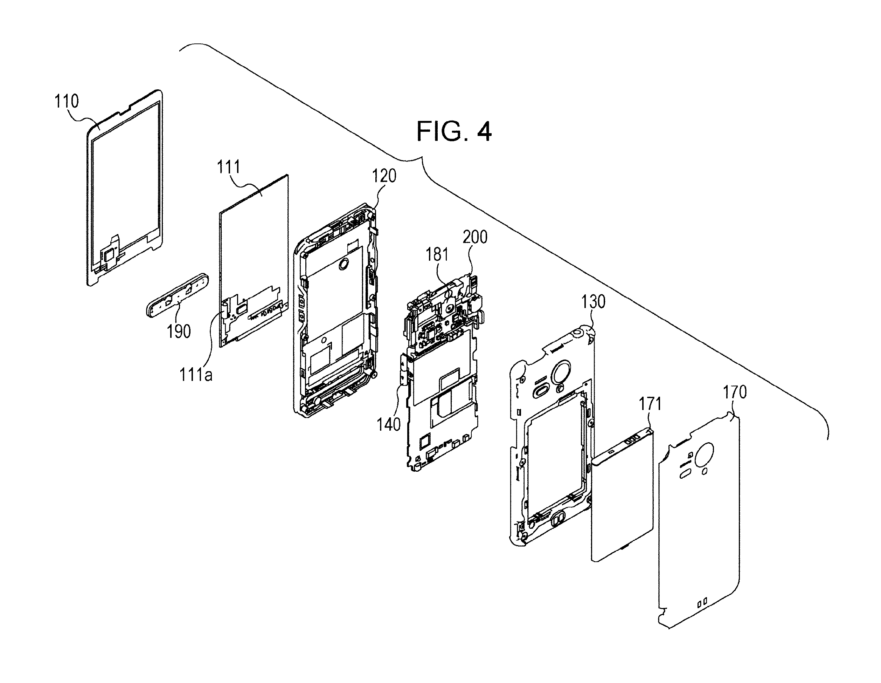

FIG. 3 is an exploded perspective view of the mobile terminal device according to the first embodiment viewed from the display unit side. FIG. 4 is an exploded perspective view of the mobile terminal device according to the first embodiment viewed from the camera side. As illustrated in FIGs. 3 and 4, a liquid crystal panel 111 is disposed inside of the liquid crystal protection panel 110. The liquid crystal panel 111 is supported by the front casing 120. In addition, the liquid crystal panel 111 is electrically connected to a circuit formed on a substrate 200 using a flexible cable 111a. In this way, a variety of images may be displayed on the liquid crystal panel 111. The light of the images passes through the display region of the liquid crystal protection panel 110 at the center thereof. Thus, the liquid crystal protection panel 110 and the liquid crystal panel 111 serve as the display unit.

In addition, the front key set 150 and the protrusion members 160 are secured to a key rubber 190 in an integrated manner. That is, the plurality of keys of the front key set 150 are connected using the key rubber 190, and each of the protrusion members 160 is secured between two of the keys. In this way, the plurality of keys of the front key set 150 and the protrusion members 160 serve as one component. The key rubber 190 is attached to the substrate 200 using a through-hole formed in a lower portion of the front casing 120. If one of the keys of the front key set 150 is pressed, one of switches 201 provided on the substrate 200 so as to correspond to the keys detects the pressing of the key. The configuration of a front key unit including the front key set 150, the protrusion members 160, and the key rubber 190 is described in more detail below.

The substrate 200 is sandwiched by the front casing 120 and the rear casing 130. The substrate 200 has the side key set 140 and a camera module 181 mounted thereon. In addition, the substrate 200 has a circuit for operating the mobile terminal device. A water-proof packing 171 is disposed between the rear casing 130 and the rear cover 170. The water-proof packing 171 protects the mobile terminal device from liquid and fine dust particles entering the inside of the mobile terminal device. Thus, for example, the circuit formed on the substrate 200 may be protected.

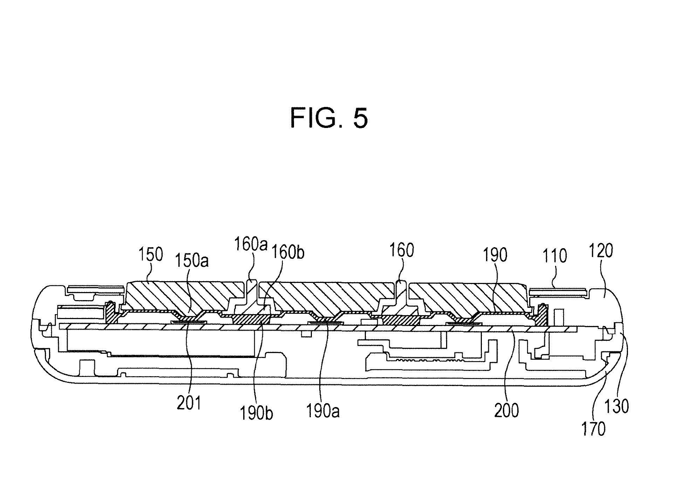

An exemplary configuration of the front key set 150 and the vicinity of the front key set 150 of the mobile terminal device according to the first embodiment is described next with reference to FIG. 5. FIG. 5 is a schematic cross-sectional view taken along a line V-V of FIG. 1. As illustrated in FIG. 5, the front key set 150 includes three independent keys. Each of the protrusion members 160 protrude from boundary areas between two of the keys. More specifically, a top end 160a of each of the protrusion members 160 protrudes so as to be higher than the surfaces of the liquid crystal protection panel 110 and the front key set 150. That is, the top end 160a of the protrusion member 160 is the furthest from the substrate 200. Accordingly, even when the mobile terminal device is placed on, for example, a desk, with the surface of the liquid crystal protection panel 110 facing downward, the top end 160a of the protrusion member 160 and a peripheral portion of the casing in which the front key set 150 is not disposed are in contact with the surface of the desk. That is, the display region of the liquid crystal protection panel 110 at the center thereof is not in direct contact with the surface of the desk. In this way, damage of the display unit may be avoided.

In addition, as illustrated in FIG. 5, the surface of the front key set 150 is higher than the surface of the liquid crystal protection panel 110. The protrusion members 160 protrude in the boundary areas of the front key set 150. Accordingly, the partial area including the front key set 150 and the protrusion members 160 is stepped upwardly from the surface of the liquid crystal protection panel 110. As a result, the protruding protrusion members 160 are not noticeable. Thus, the aesthetic appearance is negligibly spoiled by the protruding protrusion members 160, as compared with the case where independent protrusions are provided on the surface of the liquid crystal protection panel 110 or the front casing 120. In addition, since the aesthetic appearance is negligibly spoiled, the top ends 160a of the protrusion members 160 may be stepped upward to a sufficient height. As a result, damage of the display unit may be reliably avoided.

Furthermore, since the protrusion member 160 protrudes so that the top ends 160a of the protrusion members 160 are higher than the surface of the front key set 150, the inadvertent pressing of one of the keys of the front key set 150 may be avoided when the mobile terminal device is placed on, for example, desk, with the surface of the liquid crystal protection panel 110 facing downward. As a result, a false operation of the mobile terminal device may be avoided. Similarly, even when the user presses one of the keys of the front key set 150, the user does not happen to press multiple keys simultaneously since the protrusion member 160 functions as a separator between the keys. Therefore, a false operation of the mobile terminal device caused by misoperation performed by the user may be avoided as well.

The front key set 150 and the protrusion members 160 are secured to the key rubber 190. More specifically, the surface of the front key set 150 adjacent to the substrate 200 and bottom portions 160b of the protrusion members 160 are bonded to the key rubber 190. The surface of the front key set 150 adjacent to the substrate 200 has convex portions 150a formed thereon, and the key rubber 190 has concave portions 190a formed thereon. The shape of the concave portion 190a matches the shape of the convex portion 150a. If one of the keys of the front key set 150 is pressed, the convex portion 150a urges against the switch 201 formed on the substrate 200 via the concave portion 190a of the key rubber 190. As a result, the circuit of the substrate 200 executes the function corresponding to the switch 201 that is pressed.

Still furthermore, the bottom portion 160b of the protrusion member 160 is bonded to a thick portion 190b of the key rubber 190. The thick portion 190b is secured to the substrate 200. In this way, if the mobile terminal device is placed with the surface of the liquid crystal protection panel 110 facing downward, the protrusion members 160 and the thick portion 190b absorb a shock delivered to the top ends 160a of the protrusion members 160. Accordingly, damage of the protrusion members 160 negligibly occurs and, therefore, a resistance to shock may be increased.

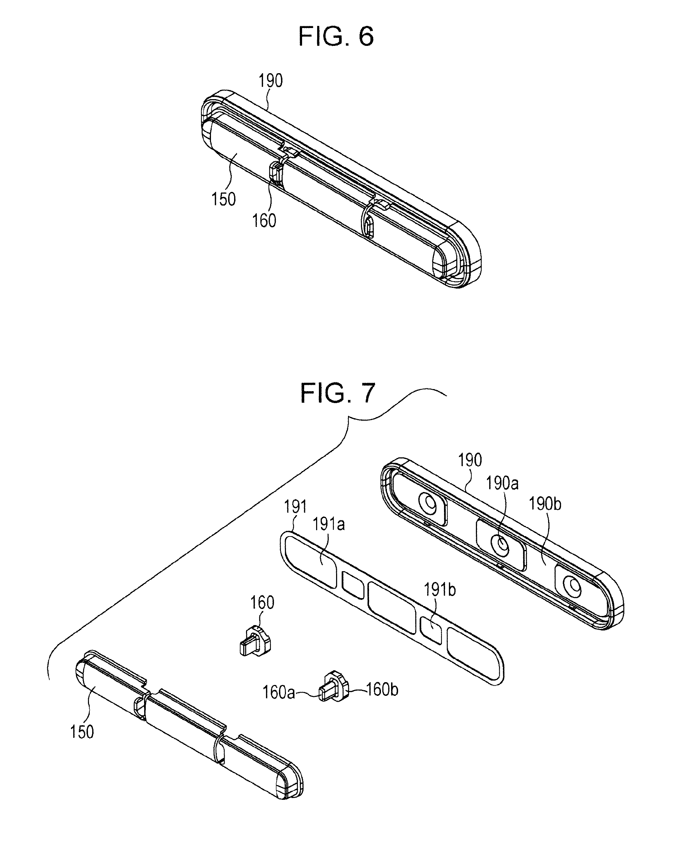

An exemplary configuration of the front key unit according to the first embodiment is described in detail next with reference to FIGs. 6 and 7. FIG. 6 is a perspective view of the front key unit according to the first embodiment. As illustrated in FIG. 6, the front key set 150 and the protrusion members 160 are secured to the key rubber 190. That is, the plurality of keys of the front key set 150 are pressably secured to the key rubber 190. Each of the protrusion members 160 is secured in a boundary area between two neighboring keys. Each of the protrusion members 160 protrudes so that the top end of the protrusion member 160 is higher than the surface of the front key set 150. By securing the plurality of keys and the protrusion members 160 of the front key set 150 to the single key rubber 190 in this manner, positioning of the keys and the protrusion members, which are small components, may be facilitated. As a result, the efficiency of assembling of the mobile terminal device is increased.

The front key set 150 is formed of a synthetic resin or a synthetic resin with metal plating. In order to allow the user to easily press the keys of the front key set 150, the surface of each of the key of the front key set 150 has a curved surface. The protrusion members 160 are formed of, for example, a transparent or semi-transparent synthetic resin. The key rubber 190 is formed of a transparent or semi-transparent elastic material (e.g., a rubber). As described above, the protrusion members 160 and the key rubber 190 are formed of a transparent or semi-transparent material. Accordingly, if a light emitting diode (LED), for example, attached to the substrate 200 of the mobile terminal device emits light, the protrusion members 160 protruding in the boundary area of the front key set 150 also emit light. Thus, even when, for example, the mobile terminal device is used in the dark, the visibility of the keys of the front key set 150 may be increased. The configuration for increasing the visibility of the keys is described in more detail below.

FIG. 7 is an exploded perspective view of the front key unit according to the first embodiment. As illustrated in FIG. 7, the front key set 150 and the protrusion members 160 are secured to the key rubber 190 with a light shielding sheet 191 therebetween. The light shielding sheet 191 is a sheet member having a high light blocking effect. The light shielding sheet 191 has through-holes 191a formed therein at positions corresponding to the keys of the front key set 150. The light shielding sheet 191 further has through-holes 191b formed therein at positions corresponding to the protrusion members 160.

The protrusion members 160 are secured to the key rubber 190 through the through-holes 191b of the light shielding sheet 191. At that time, the bottom portion 160b having a width larger than that of the top end 160a of the protrusion member 160 is bonded to the thick portion 190b of the key rubber 190. In addition, the keys of the front key set 150 are pressably secured to the key rubber 190 through the through-holes 191a of the light shielding sheet 191. At that time, the keys are secured to the key rubber 190 so that convex portions of the back surfaces of the keys fit the concave portions 190a. Since the protrusion members 160 and the front key set 150 are secured to the key rubber 190, the top ends 160a of the protrusion members 160 protrude in the boundary areas between the keys of the front key set 150.

Since the light shielding sheet 191 is disposed between the front key set 150 and the key rubber 190 and between the protrusion member 160 and the key rubber 190, light emitted from the inside of the mobile terminal device spills out of the through-holes 191a and 191b via the key rubber 190. In addition, since the protrusion members 160 bonded to the key rubber 190 via the through-holes 191b are formed of a transparent or semi-transparent material, the light is visible from the outside of the mobile terminal device at the positions of the protrusion members 160. As a result, the boundary area between the keys of the front key set 150 is illuminated. Thus, the positions of the keys may be recognized even in the dark.

Note that since the light spilling out of the through-hole 191a of the light shielding sheet 191 is viewable through a gap formed so as to surround each of the keys of the front key set 150, the outline of each of the keys of the front key set 150 becomes prominent. As a result, the positions of the keys are clearly recognizable.

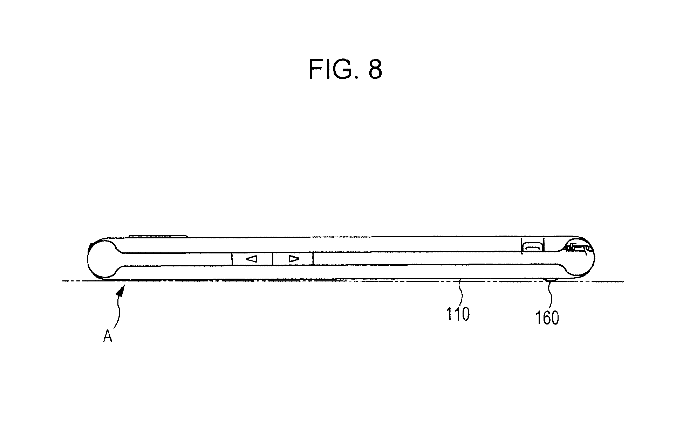

As described above, according to the first embodiment, the protrusion members 160 that protrude to a position that is higher than the position of the liquid crystal protection panel 110 in the boundary area between the keys of the front key set 150 are provided. In addition, the protrusion members 160 are formed of a transparent or semi-transparent material. Accordingly, as illustrated in FIG. 8, even when the mobile terminal device is placed on a flat surface with the surface of the liquid crystal protection panel 110 facing downward, only the protrusion members 160 and a circumferential edge portion A of the casing are in contact with a flat surface indicated by a two-dot chain line. That is, the display region of the liquid crystal protection panel 110 is not in direct contact with the flat surface and, therefore, damage of the display region (e.g., scratch damage) may be avoided.

In addition, each of the protrusion members 160 is disposed in the boundary area between two neighboring keys of the front key set 150 and naturally protrudes in the form of a separator between two neighboring keys. Accordingly, the aesthetic appearance of the mobile terminal device is not spoiled by the presence of the protrusion members 160. That is, according to the first embodiment, damage of the display region may be avoided without spoiling the aesthetic appearance of the mobile terminal device.

Second Embodiment

A second embodiment is characterized in that a liquid crystal protection panel or a front casing has such a shape that part of the liquid crystal protection panel or front casing is stepped upwardly in a boundary area between the keys of the front key set instead of providing a protrusion member in the boundary area.

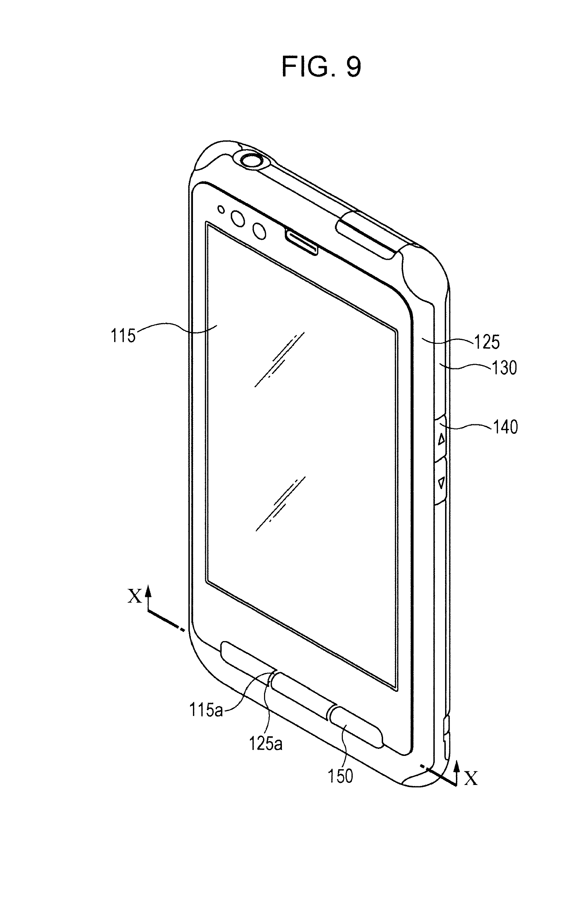

FIG. 9 is a perspective view of the exterior appearance of a mobile terminal device according to the second embodiment viewed from the side of a display unit of the mobile terminal device. The same numbering will be used in referring to the same component illustrated in FIG. 9 as is utilized above in describing FIG. 1, and descriptions of the same component is not repeated. In addition, the exterior appearance of the mobile terminal device according to the second embodiment viewed from the side of the camera is the same as that of the mobile terminal device according to the first embodiment. Accordingly, the exterior appearance is not illustrated. As illustrated in FIG. 9, the mobile terminal device includes a liquid crystal protection panel 115, a front casing 125, a rear casing 130, a side key set 140, and a front key set 150.

Like the liquid crystal protection panel 110 according to the first embodiment, the liquid crystal protection panel 115 covers a liquid crystal panel provided inside of the mobile terminal device. The liquid crystal protection panel 115 allows the light of an image displayed on the liquid crystal panel to pass therethrough in a display region located at the center thereof. Note that unlike the liquid crystal protection panel 110, the liquid crystal protection panel 115 has a raised portion 115a that is raised in the border area between the keys of the front key set 150.

Like the front casing 120 according to the first embodiment, the front casing 125 serves as a housing of the mobile terminal device on the display unit side. The front casing 125 supports the liquid crystal panel. In addition, the front casing 125 has the liquid crystal protection panel 115 attached thereto so that the liquid crystal protection panel 115 covers the liquid crystal panel. However, unlike the front casing 120, the front casing 125 has a raised portion 125a that is raised in the boundary area of the keys of the front key set 150.

The raised portion 115a of the liquid crystal protection panel 115 is joined to the raised portion 125a of the front casing 125. Thus, the raised portion 115a and the raised portion 125a protrude together so as to form an arch shape. The arch outwardly protrudes so that the top end of the arch is higher than the display region of the liquid crystal protection panel 115. In addition, the arch outwardly protrudes so that the top end of the arch is higher than the front key set 150 that is in a state of not being pressed. Accordingly, the top end of the arch formed by the raised portion 115a and the raised portion 125a protrudes so as to be the furthest from the display region surface.

According to the second embodiment, the front key set 150 is exposed to the outside in the boundary area between the liquid crystal protection panel 115 and the front casing 125. Thus, the raised portions 115a and 125a are formed on the liquid crystal protection panel 115 and the front casing 125, respectively. However, if the front key set 150 is exposed to the outside through, for example, a through-hole formed in the front casing, the front casing may be stepped upwardly so as to form an arch shape in the boundary area of the front key set 150. Similarly, if the front key set 150 is exposed to the outside through, for example, a through-hole formed in the liquid crystal protection panel, the liquid crystal protection panel may be stepped upwardly so as to form an arch shape in the boundary area of the front key set 150.

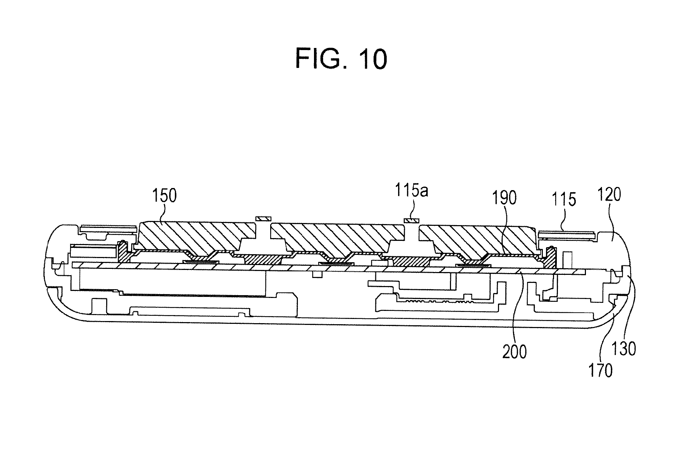

An exemplary configuration of the front key set 150 according to the second embodiment and its vicinity is described next with reference to FIG. 10. FIG. 10 is a schematic cross-sectional view taken along a line X-X of FIG. 9. As illustrated in FIG. 10, the front key set 150 has three independent keys, and the raised portion 115a of the liquid crystal protection panel 115 protrudes in the boundary area between the keys. Note that as may be seen from the cross section of the front casing 125 including the raised portion 125a, the raised portion 125a protrudes in the boundary area between the keys.

As illustrated in FIG. 10, the raised portion 115a protrudes to a point that is higher than the surface of the liquid crystal protection panel 115 and the surface of the front key set 150 disposed in the vicinity of the raised portion 115a. That is, the top end of the raised portion 115a is the furthest from the substrate 200. Accordingly, even when the mobile terminal device is placed on, for example, a desk with the surface of the liquid crystal protection panel 115 facing downward, the raised portion 115a and the circumferential edge portion of the casing in which the front key set 150 is not disposed are in contact with the surface of the desk. That is, the display region of the liquid crystal protection panel 115 at the center thereof is not in direct contact with the surface of the desk and, therefore, damage of the display unit may be avoided.

In addition, as illustrated in FIG. 10, the surface of the front key set 150 is higher than the surface of the liquid crystal protection panel 115 including the display region, and the raised portion 115a is raised in the boundary area between the keys of the front key set 150. Accordingly, the aesthetic appearance is negligibly spoiled by the uplift of partial areas of the liquid crystal protection panel 115 and the front casing 125, as compared with the case where an independent protrusion is provided on the surface of the liquid crystal protection panel 115 or the front case 125. Since the aesthetic appearance is negligibly spoiled, the raised portion 115a and the raised portion 125a may be raised to a sufficiently high point. As a result, damage of the display unit may be reliably avoided.

Furthermore, by raising the raised portions 115a and 125a to a point that is higher than the surface of the front key set 150, inadvertent pressing of the key of the front key set 150 may be avoided when the mobile terminal device is placed on, for example, desk, with the surface of the liquid crystal protection panel 115 facing downward. As a result, a false operation of the mobile terminal device may be avoided. Similarly, even when the user presses one of the keys of the front key set 150, the user does not happen to press multiple keys simultaneously since the arch formed by the raised portions 115a and 125a functions as a separator between the keys. Therefore, a false operation of the mobile terminal device caused by misoperation performed by the user may be avoided as well.

Still furthermore, according to the second embodiment, an additional protrusion member for raising the boundary area between the keys of the front key set 150 is unnecessary. Therefore, according to the second exemplary embodiment, an increase in the number of components may be avoided, as compared with the configuration according to the first embodiment.

As described above, according to the second embodiment, a partial area of the liquid crystal protection panel 115 or the front casing 125 in the boundary area between the keys of the front key set 150 is raised so as to be higher than the surface of the display region of the liquid crystal protection panel 115. Accordingly, even when the mobile terminal device is placed on a flat surface with the surface of the liquid crystal protection panel 115 facing downward, only the raised portions 115a and 125a of the liquid crystal protection panel 115 and the front casing 125, respectively, and the circumferential edge portion of the casing are in contact with the flat surface. That is, the display region of the liquid crystal protection panel 115 is not in direct contact with the flat surface and, therefore, damage of the display region (e.g., scratch damage) may be avoided.

In addition, the raised portions 115a and 125a are formed in the boundary area between the keys of the front key set 150 and naturally protrude in the form of a separator between the keys. Accordingly, the aesthetic appearance of the mobile terminal device is not spoiled by the presence of the raised portions 115a and 125a. That is, according to the second embodiment, damage of the display unit may be avoided without spoiling the aesthetic appearance of the mobile terminal device. Furthermore, according to the second embodiment, an additional protrusion member for protecting the display unit is unnecessary. Accordingly, an increase in the number of components of the mobile terminal device may be avoided.

According to the second embodiment, the housing of the mobile terminal device may be manufactured so that the raised portions 115a and 125a are transparent or semi-transparent. That is, the liquid crystal protection panel 115 and the front casing 125 may be produced by, for example, molding a transparent synthetic resin, and portions other than the display region and the raised portions 115a and 125a may be colored. In this way, if an LED, for example, provided inside of the mobile terminal device emits light, the light is led to the outside through the raised portions 115a and 125a. Accordingly, an advantage that is the same as that of the protrusion member 160 of the first embodiment formed from a transparent or semi-transparent material may be obtained.

While the above embodiments have been described with reference to the protrusion members 160 or the raised portions 115a and 125a that are located in the boundary area between the keys of the front key set 150 and that protrude to a point higher than the surface of the front key set 150, the height of the protrusion members 160 and a protrusion portion including the raised portions 115a and 125a may be equal to or lower than the surface of the front key set 150. That is, if the protrusion portions protrude at least a point that is higher than the surface of the display regions of the liquid crystal protection panels 110 and 115, damage of the display unit occurring when the mobile terminal device is placed may be avoided using the front key set 150 or the protrusion portion.

In addition, while the above embodiments have been described with reference to the mobile terminal device, the embodiments are applicable to any electronic apparatus having an operation unit, such as front keys, on the same surface as the surface of a display unit in order to avoid damage of the display unit without spoiling the aesthetic appearance of the electronic apparatus by providing a protrusion portion that is similar to that of each of the above-described embodiments.

The principle of the invention can be applied to any type of display unit having a planar display region. Also, the protrusion member(s) may be provided at a boundary between more than two keys formed in a cross shape, X-shape or the like. The keys are not restricted to simple push keys but may be operable in other ways such as by rocking, tilting and the like.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the scope of the claims.

## Claims

1. An electronic apparatus comprising:
a display unit including a planar display region;
an operation unit formed on a side on which the planar display region is formed, the operation unit including a plurality of keys, the plurality of keys being allowed to be depressed; and
at least one protrusion member formed between at least two of the plurality of keys, the protrusion member protruding from a surface of the planar display region.

2. The electronic apparatus according to claim 1, further comprising a connecting member connecting the plurality of keys, the connecting member allowing the plurality of keys to be connected to a substrate disposed in the electronic apparatus, wherein the protrusion member is secured to the connecting member.

3. The electronic apparatus according to claim 1 or 2, wherein the protrusion member is made of one of a transparent material and semi-transparent material so as to allow a light emitted in the electronic apparatus to propagate outside the electronic apparatus.

4. The electronic apparatus according to claim 1, 2, or 3, wherein the protrusion member is formed in a manner such that a cover in a vicinity of the plurality of keys is raised so as to be higher than the surface of the planar display region, the covers being a part of the display unit or the operation unit.

5. The electronic apparatus according to any preceding claim, wherein the protrusion member extends higher than each top of the plurality of keys.

6. The electronic apparatus according to any preceding claim, wherein the protrusion member is formed in a manner such that covers in a vicinity of the plurality of keys are raised so as to be higher than the surface of the planar display region, the covers being a part of the display unit and a part of the operation unit.
